(19) Europäisches Patentamt / European Patent Office / Office européen des brevets

(11) **EP 3 024 951 B1**

(12) **FASCICULE DE BREVET EUROPEEN**

(45) Date de publication et mention
de la délivrance du brevet:
**12.07.2017 Bulletin 2017/28**

(21) Numéro de dépôt: **14767088.9**

(22) Date de dépôt: **24.07.2014**

(51) Int Cl.:
*C21D 8/02* *(2006.01)*   *C23C 2/06* *(2006.01)*
*C21D 9/46* *(2006.01)*   *C22C 38/02* *(2006.01)*
*C22C 38/04* *(2006.01)*

(86) Numéro de dépôt international:
**PCT/IB2014/001389**

(87) Numéro de publication internationale:
**WO 2015/011554 (29.01.2015 Gazette 2015/04)**

(54) **TÔLE D'ACIER À TRÈS HAUTES CARACTÉRISTIQUES MÉCANIQUES DE RÉSISTANCE ET DE DUCTILITÉ, PROCÉDÉ DE FABRICATION ET UTILISATION DE TELLES TÔLES**

STAHLBLECH MIT SEHR HOHEN MECHANISCHEN FESTIGKEITS- UND DEHNBARKEITSEIGENSCHAFTEN, HERSTELLUNGSVERFAHREN UND VERWENDUNG SOLCHER BLECHE

STEEL SHEET HAVING VERY HIGH MECHANICAL PROPERTIES OF STRENGTH AND DUCTILITY, MANUFACTURING METHOD AND USE OF SUCH SHEETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2013 PCT/IB2013/001614**

(43) Date de publication de la demande:
**01.06.2016 Bulletin 2016/22**

(73) Titulaire: **Arcelormittal**
**1160 Luxembourg (LU)**

(72) Inventeurs:
• **ALLAIN, Sébastien, Yves, Pierre**
**F-54700 Pont-à-Mousson (FR)**
• **HELL, Jean-Christophe, François**
**F-57070 Metz (FR)**

(74) Mandataire: **Lavoix**
**2, place d'Estienne d'Orves**
**75441 Paris Cedex 09 (FR)**

(56) Documents cités:
EP-A1- 1 559 798     EP-A1- 2 325 346
EP-A1- 2 530 180     WO-A1-2012/120020
JP-A- 2012 031 462    US-A1- 2012 312 433

• F.G. CABALLERO ET AL: "Design of cold rolled and continuous annealed carbide-free bainitic steels for automotive application", MATERIALS & DESIGN, vol. 49, 24 février 2013 (2013-02-24), pages 667-680, XP055090881, ISSN: 0261-3069, DOI: 10.1016/j.matdes.2013.02.046

**Description**

La présente invention couvre la fabrication de tôles d'aciers à très haute résistance, présentant simultanément une résistance mécanique et une capacité de déformation permettant de réaliser des opérations de mise en forme à froid. L'invention concerne plus précisément des aciers présentant une résistance mécanique supérieure à 900 MPa, présentant une limite élastique supérieure à 700 MPa et un allongement uniforme supérieur à 12%. Les véhicules et notamment les véhicules terrestres à moteur (automobiles, moissonneuses batteuses, remorques, semi-remorques...) constituent notamment un domaine d'application de ces tôles d'aciers avec pour applications possibles les pièces de structure, les éléments de renforts voire la fabrication de pièces résistantes à l'abrasion.

La forte demande de réduction d'émissions de gaz à effet de serre, associée à la croissance des exigences de sécurité automobile et les prix du carburant ont poussé les constructeurs de véhicules terrestres à moteur à utiliser de plus en plus d'aciers à résistance mécanique améliorée dans la carrosserie afin de réduire l'épaisseur des pièces et donc le poids des véhicules tout en maintenant les performances de résistance mécanique des structures. Dans cette perspective, les aciers alliant une résistance élevée à une formabilité suffisante pour la mise en forme sans apparition de fissures prennent une importance grandissante. Il a ainsi été proposé, dans le temps et de manière successive, plusieurs familles d'aciers offrant divers niveaux de résistance mécanique. Ces familles comprennent les aciers DP pour Dual Phase, les aciers TRIP pour Transformation Induced Plasticity, les aciers Multiphasés voire les aciers à basse densité (FeAl).

Afin de répondre à cette demande de véhicules de plus en plus légers, il est donc nécessaire d'avoir des aciers de plus en plus résistant pour compenser la baisse d'épaisseur. Cependant, il est connu que dans le domaine des aciers au carbone, une augmentation de la résistance mécanique s'accompagne généralement d'une perte de ductilité. En outre, les constructeurs de véhicules terrestres à moteur définissent des pièces de plus en plus complexes qui nécessitent des aciers présentant des niveaux élevés de ductilité.

On a pu prendre connaissance du brevet WO2012164579 faisant état d'une microstructure composée principalement de bainite pour un acier avec la composition chimique suivante C: 0,25 - 0,55, Si: 0,5 - 1,8, Mn: 0,8 - 3,8, Cr: 0,2 - 2,0, Ti: 0,0 - 0,1, Cu: 0,0 - 1,2, V: 0,0 - 0,5, Nb: 0,0 - 0,06, Al: 0,0 - 2,75, N: < 0,004 P: < 0,025 S: < 0,025 ainsi que le procédé de fabrication de cet acier bainitique à chaud comprenant les étapes de refroidissement de la tôle bobinée jusqu'à l'ambiante, la transformation bainitique s'effectuant pendant le refroidissement. La microstructure bainitique dans le cadre de ce brevet est obtenue par un procédé à chaud, ce qui mène à une tôle épaisse de résistance élevée. Un laminage à froid pour abaisser l'épaisseur nécessite des forces très élevées et la tôle à chaud ne permet pas de répondre aux impératifs d'allégement pour répondre aux exigences du secteur automobile.

D'autre part, on a connaissance du brevet EP1553202 qui présente un acier à très haute résistance avec une résistance à la fragilisation par hydrogène élevée comprenant: 0,06 à 0,6% de C; 0,5 à 3% de Si+Al; 0,5 à 3% de Mn; moins de 0,15% de P ; moins de 0,02% de S en pourcentage massique, la microstructure inclut plus de 3% d'austénite résiduelle, plus de 30% de ferrite bainitique, et préférentiellement moins de 50% de ferrite polygonale en fraction surfacique. Les aciers obtenus avec cette invention présentent une forte dispersion en termes de propriété mécanique du fait de larges fenêtres en termes de composition chimique et de route métallurgiques, c'est-à-dire de paramètres de production.

Le but de la présente invention est de résoudre les problèmes évoqués ci-dessus. Elle vise à mettre à disposition un acier laminé à froid présentant une résistance mécanique supérieure à 900 MPa, une limite élastique supérieure à 700 MPa conjointement avec un allongement uniforme supérieur à 12%. L'invention vise également et principalement à mettre à disposition un acier avec une aptitude à être produit de manière stable. La robustesse de la route de production étant un élément majeur de l'invention.

De la sorte, le coût de fabrication est abaissé et les schémas de fabrication thermomécaniques sont simplifiés et peu dispersifs.

A cet effet, l'invention a pour objet une tôle d'acier laminée à froid et recuite de résistance mécanique supérieure ou égale à 900 MPa, avec une limite élastique supérieure à 700 MPa et un allongement uniforme supérieur ou égal à 12% dont la composition comprend, les teneurs étant exprimées en pourcentage du poids : $0,26\% \leq C \leq 0,45\%$, préférentiellement $0,26\% \leq C \leq 0,35\%$, $1,0\% \leq Mn \leq 3,0\%$, préférentiellement $1,4\% \leq Mn \leq 2,6\%$, $1,0\% \leq Si \leq 3,0\%$, préférentiellement $1,4\% \leq Si \leq 1,8\%$, $Al \leq 0,1\%$, $Cr \leq 1,5\%$, préférentiellement $Cr \leq 0,5\%$, $S \leq 0,005\%$, $P \leq 0,020\%$, $Nb \leq 0,1\%$, préférentiellement $Nb \leq 0,05\%$, $Ti \leq 0,02\%$, $V \leq 0,015\%$, $N \leq 0,01\%$ le reste de la composition étant constitué de fer et d'impuretés inévitables résultant de l'élaboration, étant entendu que $256 \times C + 47 \times Mn + 150 \times Cr + 2260 \times Nb > 142$, la microstructure étant constituée, en proportions surfaciques, de 13 à 25 % d'austénite résiduelle, de 13 à 30% d'îlots de martensite et d'austénite résiduelle, le solde étant constitué de ferrite et de bainite.

De manière préférentielle, l'acier selon l'invention contient au maximum 30% de ferrite.

Préférentiellement, l'allongement total de l'acier selon l'invention est supérieur à 14, voire 15%.

Préférentiellement contient un revêtement de Zinc ou d'alliage de zinc voire un revêtement d'aluminium ou d'alliage d'aluminium.

L'invention a aussi pour objet un procédé de fabrication d'une tôle d'acier laminée à froid recuite de résistance supérieure ou égale à 900 MPa, de limite élastique supérieure à 700 MPa et d'allongement supérieur ou égal à 12% comprenant les étapes selon lesquelles :

- on approvisionne un acier de composition, puis
- on coule ledit acier sous forme de demi-produit, puis
- on porte ledit demi-produit à une température $T_{rech}$ comprise entre 1150°C et 1275°C pour obtenir un demi-produit réchauffé, puis
- on lamine à chaud ledit demi-produit réchauffé, la température de fin de laminage à chaud $T_{fl}$ étant supérieure ou égale à 850°C pour obtenir une tôle laminée à chaud, puis
- on bobine ladite tôle laminée à chaud à une température $T_{bob}$ comprise entre 540 et 590°C pour obtenir une tôle laminée à chaud bobinée puis,
- on refroidit ladite tôle laminée à chaud bobinée jusqu'à la température ambiante, puis,
- optionnellement, on effectue un recuit dit base de ladite tôle laminée à chaud bobinée de telle sorte que la tôle soit recuite à une température comprise entre 400°C et 700°C pendant une durée comprise entre 5 et 24 heures.
- on débobine et on décape ladite tôle laminée à chaud bobinée recuite de façon à obtenir une tôle laminée à chaud apte au laminage à froid, puis
- on lamine à froid ladite tôle laminée à chaud apte au laminage à froid avec un taux de réduction compris entre 30 et 80% de façon à obtenir une tôle laminée à froid, puis,
- on recuit ladite tôle laminée à froid en la réchauffant à une vitesse Vc comprise entre 2 et 50°C/s jusqu'à une température $T_{soaking}$ comprise entre 760 et 1100°C, pendant une durée $t_{soaking}$ comprise entre 60 et 600 secondes, puis,
- on refroidit ladite tôle laminée à froid en la soumettant à un refroidissement à une vitesse comprise entre 20 et 1000°C/s telle que la température de fin de refroidissement $T_{OA}$ soit comprise entre 360°C et 440°C, étant entendu que :

$$T_{soaking} < 1.619 \, (T_{OA} - T1) \text{ où } T1 = \text{-}206 \, C - 43 \, Mn - 164 \, Cr \text{ -}896 \, Nb.$$

$$T_{soaking} > 1.619 \, (T_{OA} - T2) \text{ où } T2 = 50 \, C + 4 \, Mn - 14 \, Cr + 1364 \, Nb - 132.$$

Avec les températures en °C et les compositions chimiques en pourcent massique,

- on maintient ladite tôle laminée à froid dans la plage de température allant de 360 à 440°C pendant une durée tOA comprise entre 100 et 2000 secondes.

De manière préférentielle, on maintient ladite tôle à la température de fin de refroidissement $T_{OA}$ de manière isotherme entre 360 et 440°C et entre 100 et 2000 secondes.

De manière préférentielle, la température $T_{fl}$ de fin de laminage est supérieure ou égale à 900°C.

De manière préférentielle, on refroidit la tôle recuite jusqu'à l'ambiante avant de la revêtir de Zinc ou d'alliage de Zinc par un procédé adapté tel qu'un dépôt électrolytique ou physico-chimique.

De manière optionnelle, on peut revêtir la tôle laminée à froid recuite de Zinc ou d'alliage de Zinc par un procédé de galvanisation au trempé à chaud avant refroidissement jusqu'à l'ambiante.

De manière optionnelle, on peut revêtir la tôle laminée à froid recuite d'Al ou d'alliage d'Al par un procédé d'aluminiage au trempé à chaud avant refroidissement jusqu'à l'ambiante.

De manière optionnelle, on re-lamine à froid la tôle recuite avec un taux de laminage à froid compris entre 0,1 et 3%.

De manière préférentielle, on recuit ensuite ladite tôle recuite et éventuellement revêtue à une température de maintien $T_{base}$ comprise entre 150°C et 190°C pendant un temps de maintien $t_{base}$ compris entre 10h et 48h.

De manière optionnelle, on peut emboutir à chaud la tôle après le recuit à la température $T_{soaking}$ et avant le refroidissement à la vitesse Vc.

La tôle selon l'invention, laminée à froid et recuite, ou fabriquée par un procédé selon l'invention sert pour la fabrication de pièces pour véhicules terrestres à moteur.

D'autres caractéristiques et avantages de l'invention apparaîtront au cours de la description ci-dessous

Selon l'invention, la teneur en carbone, en poids, est comprise entre la teneur en carbone, en pourcentage massique, est comprise entre 0,26 et 0,45%. Si la teneur en carbone de l'invention est au-dessous de 0,26% en poids, la résistance mécanique devient insuffisante et la fraction d'austénite résiduelle est toujours insuffisante pour atteindre un allongement uniforme supérieur à 12%. Au-delà de 0,45%, la soudabilité devient de plus en plus réduite car on forme des microstructures de faible ténacité dans la Zone Affectée Thermiquement (ZAT) ou dans la zone fondue en cas de soudage par résistance. Selon un mode préféré, la teneur en carbone est comprise entre 0,26 et 0,35%. Au sein de cette plage, la soudabilité est satisfaisante, la stabilisation de l'austénite est optimisée et la fraction de martensite est dans la gamme visée de l'invention.

Le manganèse est un élément durcissant par solution solide de substitution, il stabilise l'austénite et abaisse la température de transformation Ac3. Le manganèse contribue donc à une augmentation de la résistance mécanique. Selon l'invention, une teneur minimale de 1,0 % en poids est nécessaire pour obtenir les propriétés mécaniques désirées. Cependant, au-delà de 3,0%, son caractère gammagène conduit à la formation d'une structure en bandes trop marquée pouvant nuire aux propriétés de mise en forme de la pièce de structure automobile, de plus la revêtabilité sera réduite. A titre préférentiel, un intervalle de teneur en manganèse compris entre 1,4% et 2,6%, on combine ainsi une résistance mécanique satisfaisante sans accroître le risque de formation de structures en bandes néfastes à la mise en forme ni augmenter la trempabilité dans les alliages soudés, ce qui nuirait à la capacité au soudage de la tôle selon l'invention.

La stabilisation de l'austénite résiduelle est rendue possible par l'addition de silicium qui ralentit considérablement la précipitation des carbures lors du cycle de recuit et plus particulièrement lors de la transformation bainitique. Ceci provient du fait que la solubilité du silicium dans la cémentite est très faible et que cet élément augmente l'activité du carbone dans l'austénite. Toute formation de cémentite sera donc précédée d'une étape de rejet de Si à l'interface. L'enrichissement de l'austénite en carbone mène donc à sa stabilisation à la température ambiante sur la tôle d'acier recuite. Par la suite, l'application d'une contrainte extérieure, de mise en forme par exemple, va conduire à la transformation de cette austénite en martensite. Cette transformation a pour résultat d'améliorer aussi la résistance à l'endommagement. Au regard des propriétés visées par l'invention, une addition de silicium en quantité supérieure à 3,0% va promouvoir sensiblement la ferrite et la résistance mécanique visée ne serait pas atteinte, de plus on formerait des oxydes fortement adhérents qui mèneraient à des défauts de surface, la teneur minimale doit aussi être fixée à 1,0% en poids pour obtenir l'effet stabilisant sur l'austénite. De manière préférentielle, la teneur en silicium sera comprise entre 1,4 et 1,8% afin d'optimiser les effets susmentionnés.

La teneur en chrome doit être limitée à 1,5%, cet élément permet de contrôler la formation de ferrite pro-eutectoïde au refroidissement lors du recuit à partir de ladite température de maintien $T_{soaking}$, cette ferrite, en quantité élevée diminue la résistance mécanique nécessaire à la tôle selon l'invention. Cet élément permet en outre de durcir et d'affiner la microstructure bainitique. Préférentiellement la teneur en chrome sera inférieure à 0,5 % pour des raisons de coûts et pour éviter un durcissement trop important.

Le nickel et le cuivre ont des effets sensiblement similaires à celui du manganèse. Ces deux éléments seront en teneurs résiduelles.

La teneur en aluminium est limitée à 0,1% en poids, cet élément est un puissant alphagène favorisant la formation de ferrite. Une teneur élevée en aluminium augmenterait le point Ac3 et rendrait ainsi le procédé industriel couteux en termes d'apport énergétique au recuit. On considère, en outre, que des teneurs élevées en aluminium accroissent l'érosion des réfractaires et le risque de bouchage des busettes lors de la coulée de l'acier en amont du laminage. De plus l'aluminium ségrége négativement et, il peut mener à des macro-ségrégations. En quantité excessive, l'aluminium diminue la ductilité à chaud et augmente le risque d'apparition de défauts en coulée continue. Sans un contrôle poussé des conditions de coulée, les défauts de type micro et macro ségrégation donnent, *in fine*, une ségrégation centrale sur la tôle d'acier recuite. Cette bande centrale sera plus dure que sa matrice circonvoisine et nuira à la formabilité du matériau.

Pour le soufre, au-delà d'une teneur de 0,005%, la ductilité est réduite en raison de la présence excessive de sulfures tels que MnS dits sulfures de manganèse qui diminuent l'aptitude à la déformation.

Le phosphore est un élément qui durcit en solution solide mais qui diminue considérablement la soudabilité par points et la ductilité à chaud, particulièrement en raison de son aptitude à la ségrégation aux joints de grains ou à sa tendance à la co-ségrégation avec le manganèse. Pour ces raisons, sa teneur doit être limitée à 0,020% afin d'obtenir une bonne aptitude au soudage par points.

Le niobium est un élément de micro-alliage qui a la particularité de former des précipités durcissant avec le carbone et/ou l'azote. Ces précipités, déjà présents lors de l'opération de laminage à chaud, retardent la recristallisation lors du recuit et affinent donc la microstructure, ce qui permet de contribuer au durcissement du matériau. Il permet en outre d'améliorer les propriétés d'allongement du produit, en permettant des recuits à hautes température sans abaissement des performances d'allongement par un effet d'affinement des structures. La teneur en niobium doit néanmoins être limitée à 0,1% pour éviter des efforts de laminage à chaud trop importants et pour des raisons économiques. Préférentiellement la teneur en niobium sera inférieure à 0,05 % pour éviter un durcissement trop important de la tôle à froid et pour des raisons de coûts. Dans un autre mode de réalisation, on préfère que la teneur en niobium soit supérieure ou égale à 0.001% ce qui permet d'avoir un durcissement de la ferrite lorsque celle-ci est présente et qu'un tel durcissement est recherché.

Les autres éléments de micro-alliage tels que le titane et le vanadium sont respectivement limités aux teneurs maximales de 0,02% et 0,015% car ces éléments possèdent les mêmes avantages que le niobium mais ils ont la particularité de réduire la ductilité du produit. Cette limitation est en outre économique.

L'azote est limité à 0,01% afin d'éviter des phénomènes de vieillissement du matériau et de minimiser la précipitation de nitrures d'aluminium (AlN) lors de la solidification et donc de fragiliser le demi-produit.

Le reste de la composition est constitué de fer et d'impuretés inévitables résultant de l'élaboration.

Selon l'invention, la microstructure de l'acier doit contenir, en proportions surfaciques, de 13 à 25 % d'austénite. Si la teneur en austénite résiduelle est inférieure à 13% l'allongement uniforme sera inférieur à 12%. Si elle est supérieure à 25%, l'austénite résiduelle sera instable car pas assez enrichie en carbone et la ductilité de l'acier en serait réduite, la limite d'élasticité sera inférieure à 700MPa.

En outre, l'acier selon l'invention doit contenir entre 13 à 30 % d'îlots MA, c'est-à-dire, des îlots d'austénite résiduelle et martensite, cette dernière pouvant être fraiche ou revenue de façon indifférente. Si la teneur en îlots MA est inférieure à 13%, la résistance mécanique de 900 MPa ne sera pas atteinte et si elle est supérieure à 30%, l'allongement uniforme sera inférieur à 12%.

Le solde de la microstructure est constitué de bainite et éventuellement de ferrite. De préférence, la ferrite, lorsqu'elle est présente est de type polygonale.

La tôle selon l'invention pourra être fabriquée par tout procédé adapté. Par exemple, on pourra utiliser le procédé selon l'invention qui peut comporter les étapes qui vont être décrites.

On approvisionne tout d'abord un acier de composition selon l'invention. Puis, on procède à la coulée d'un demi-produit à partir de cet acier. Cette coulée peut être réalisée en lingots ou en continu sous forme de brames.

Les demi-produits coulés peuvent ensuite être portés à une température $T_{rech}$ supérieure à 1150°C pour obtenir un demi-produit réchauffé afin d'atteindre en tout point une température favorable aux déformations élevées que va subir l'acier lors du laminage. Cet intervalle de température permet d'être dans le domaine austénitique. Cependant, si la température $T_{rech}$ est supérieure à 1275°C, les grains austénitiques croissent de façon indésirable et mèneront à une structure finale plus grossière et les risques de défauts de surface liés à la présence d'oxyde liquide sont accru. Il est bien sûr également possible de laminer à chaud directement après la coulée sans réchauffer la brame.

On lamine donc à chaud le demi-produit dans un domaine de température où la structure de l'acier est totalement austénitique : si la température de fin de laminage $T_{fl}$ est inférieure à 850°C, les efforts de laminage sont très importants pouvant entraîner des consommations énergétiques importantes. Préférentiellement, on respectera une température de fin de laminage supérieure à 900°C.

On bobine ensuite le produit laminé à chaud à une température $T_{bob}$ comprise entre 540 et 590°C. Cette gamme de température permet d'obtenir des transformations ferritiques, bainitiques ou perlitiques pendant le maintien quasi-isotherme associé au bobinage suivi d'un refroidissement lent afin de minimiser la fraction de martensite après refroidissement. Une température de bobinage supérieure à 590°C conduit à la formation d'oxydes de surface non désirés. Lorsque la température de bobinage est trop basse, en dessous de 540°C, la dureté du produit après refroidissement est augmentée, ce qui augmente les efforts nécessaires lors du laminage à froid ultérieur.

On décape ensuite si nécessaire le produit laminé à chaud selon un procédé connu en lui-même.

Optionnellement, on effectue un recuit base intermédiaire de la tôle laminée à chaud bobinée entre $T_{RB1}$ et $T_{RB2}$ avec $T_{RB1}$=400°C et $T_{RB2}$=700°C pendant une durée comprise entre 5 et 24 heures.

Ce traitement thermique permet d'avoir une résistance mécanique inférieure à 1000 MPa en tout point de la tôle laminée à chaud, l'écart de dureté entre le centre de la tôle et les rives étant ainsi minimisé. Ceci facilite considérablement l'étape suivante de laminage à froid par un adoucissement de la structure formée.

On effectue ensuite un laminage à froid avec un taux de réduction compris préférentiellement entre 30 et 80%.

On chauffe ensuite le produit laminé à froid, préférentiellement au sein d'une installation de recuit continu, avec une vitesse moyenne de chauffage $V_C$ comprise entre 2 et 50°C par seconde. En relation avec la température de recuit $T_{soaking}$ ci-dessous, cette gamme de vitesse de chauffage permet d'obtenir une recristallisation et un affinement adéquat de la structure. Au dessous de 2°C par seconde, on évite les risques de décarburation de surface. Au dessus de 50°C par seconde, on évite la présence de traces de non recristallisation et de carbures insolubles lors du maintien ce qui aurait pour effet de réduire la fraction d'austénite résiduelle.

Le chauffage est effectué jusqu'à une température de recuit $T_{soaking}$ comprise entre la température 760°C, et 1100°C. Lorsque $T_{soaking}$ est inférieure à 760°C, on promeut la présence de phases non recristallisées dommageable pour l'allongement. Inversement, si $T_{soaking}$ est au dessus de 1100°C, les tailles de grains austénitiques augmentent considérablement ce qui est dommageable pour l'affinement de la microstructure finale et donc pour les niveaux de limite d'élasticité.

Une durée de maintien $t_{soaking}$ comprise entre 60 et 600 secondes à la température $T_{soaking}$ permet la dissolution des carbures préalablement formés, et surtout une transformation suffisante en austénite. En dessous de 60s la dissolution des carbures serait insuffisante. D'autre part, un temps de maintien supérieur à 600 s est difficilement compatible avec les exigences de productivité des installations de recuit continu, en particulier la vitesse de défilement de la bobine.

5

La durée de maintien $t_{soaking}$ est donc comprise entre 60 et 600 s.

A la fin du maintien de recuit, on refroidit la tôle jusqu'à atteindre une température $T_{OA}$ comprise entre $T_{OA1}$=360°C et $T_{OA2}$=440°C, la vitesse de refroidissement $V_{ref}$ étant suffisamment rapide pour éviter la formation de la perlite. A cet effet, cette vitesse de refroidissement est comprise entre 20°C et 1000°C par seconde. Au-delà de 1000°C par seconde, il devient difficile d'atteindre avec précision la température $T_{OA}$ visée. En dessous de 360°C, la fraction de bainite est trop importante et la fraction d'austénite résiduelle est insuffisante et sa stabilité est trop grande en conséquence. Les allongements sont alors insuffisants, c'est-à-dire en dessous de 12% pour l'allongement uniforme. Au dessus de 440°C, la fraction de bainite est trop faible pour permettre de stabiliser une fraction d'austénite suffisante mais favorise la présence dommageable d'une trop grande fraction de martensite. Les limites d'élasticité ou les allongements sont alors insuffisants.

Le temps de maintien $t_{OA}$ dans la gamme de température $T_{OA1}$ (°C) à $T_{OA2}$ (°C) doit être supérieur à 100 secondes afin de permettre la transformation bainitique et ainsi la stabilisation de l'austénite par enrichissement en carbone de ladite austénite. Elle doit aussi être inférieure à 2000 s de façon à éviter la précipitation de carbures ce qui aurait pour effet de réduire la fraction d'austénite résiduelle et donc de nuire à la ductilité du produit.

Le couple de la température de recuit $T_{soaking}$ et celle du maintien à $T_{OA}$ est tel que défini par les relations (1) et (2) suivantes :

Relation 1 :

$$T°soaking < 1{,}619\,(T_{OA} - T_1)\ \text{où}\ T_1 = -206\,C - 43\,Mn - 164\,Cr - 896\,Nb$$

Relation 2 :

$$T°soaking > 1{,}619\,(T_{OA} - T_2)\ \text{où}\ T_2 = 50\,C + 4\,Mn - 14\,Cr + 1364\,Nb - 132$$

avec les températures en °C et les compositions chimiques en pourcent massique. De manière préférentielle, on effectuera ce maintien de manière isotherme.

Respecter ces relations entre la composition chimique et les temperatures $T_{soaking}$ de recuit et de maintien $T_{OA}$ permet d'avoir de manière stable une résistance supérieure à 900 MPa, une limite élastique supérieure à 700 MPa et enfin un allongement uniforme supérieur à 12%. Ceci est un point essentiel de l'invention car permettant à la route métallurgique de production d'être robuste pour obtenir une tôle ne présentant pas des réponses mécaniques différentes selon la dispersion du procédé de production dans les plages de températures et d'éléments de composition chimique de l'invention.

Une autre alternative serait d'effectuer un dépôt de Zn ou d'alliage de Zn (plus de 50% de Zn en pourcentage massique) par revêtement au trempé à chaud avant refroidissement à l'ambiante. Préférentiellement, on pourra aussi revêtir de Zinc ou d'alliage de Zinc par tout procédé électrolytique ou physico-chimique connus en eux-mêmes la tôle recuite nue. Un revêtement à base d'aluminium ou d'alliage à base d'aluminium (plus de 50% d'Al en pourcentage massique) peut aussi être déposé par trempé à chaud.

On effectue ensuite, préférentiellement, un traitement thermique de post recuit base sur la tôle laminée à froid et recuite et éventuellement revêtue, à une température de maintien $T_{base}$ comprise entre 150°C et 190°C pendant un temps de maintien $t_{base}$ compris entre 10h et 48h afin d'améliorer la limite d'élasticité et la pliabilité. Ce traitement sera appelé : post recuit base.

La présente invention va être maintenant illustrée à partir des exemples suivants donnés à titre non limitatif.

Exemples

On a élaboré des aciers dont la composition figure au tableau ci-dessous, exprimée en pourcentage massique. Le tableau 1 indique la composition chimique de l'acier ayant servi à la fabrication de tôles selon l'invention.

Tableau 1 : Compositions chimiques (% poids).

| Steel | C | Mn | Si | Al | Cr | Mo | Cu | Ni | V | Nb | S | P | B | Ti | N |
|-------|------|------|------|-------|-------|-------|-------|-------|-------|-------|--------|--------|--------|--------|-------|
| A | 0.24 | 1.51 | 1.48 | 0.002 | 0.007 | 0.002 | 0.007 | 0.004 | 0.002 | 0.002 | 0.0015 | 0.0135 | 0.0004 | 0.001 | 0.004 |
| B | 0.29 | 1.50 | 1.48 | 0.002 | 0.007 | 0.002 | 0.007 | 0.004 | 0.002 | 0.002 | 0.0015 | 0.0134 | 0.0004 | 0.001 | 0.005 |
| C | 0.29 | 1.51 | 1.48 | 0.002 | 0.007 | 0.002 | 0.007 | 0.004 | 0.002 | 0.012 | 0.0015 | 0.0140 | 0.0004 | 0.001 | 0.006 |
| D | 0.27 | 2.05 | 1.44 | 0.002 | 0.007 | 0.002 | 0.007 | 0.004 | 0.002 | 0.030 | 0.0009 | 0.0133 | 0.0004 | 0.001 | 0.006 |
| E | 0.31 | 1.48 | 1.49 | 0.003 | 0.003 | 0.002 | 0.002 | 0.002 | 0.002 | 0.001 | 0.0030 | 0.0160 | 0.0004 | 0.001 | 0.000 |
| F | 0.31 | 2.46 | 1.52 | 0.003 | 0.080 | 0.012 | 0.001 | 0.001 | 0.002 | 0.002 | 0.0030 | 0.0020 | 0.0004 | 0.001 | 0.001 |
| G | 0.31 | 2.46 | 1.49 | 0.003 | 0.014 | 0.002 | 0.005 | 0.005 | 0.002 | 0.002 | 0.002 | 0.004 | 0.0005 | 0.0008 | 0.004 |

Des tôles correspondant aux compositions ci-dessus ont été produites suivant des conditions de fabrication rassemblées dans le tableau 2.

A partir de ces compositions, certains aciers ont fait l'objet de différentes conditions de recuit. Les conditions avant laminage à chaud sont identiques avec un réchauffage compris entre 1230°C et 1275°C, une température de fin de laminage comprise entre 930°C et 990°C et un bobinage compris entre 550°C et 580°C. Les produits laminés à chaud sont ensuite tous décapés puis, selon l'acier, directement laminés à froid ou recuits préalablement au laminage à froid avec un taux de réduction compris entre 60 et 70 %.

Le tableau 2 indique aussi les conditions de fabrication des tôles recuites après laminage à froid avec les dénominations suivantes :

- température de réchauffage : $T_{rech}$
- température de fin de laminage : $T_{fl}$
- température de bobinage : $T_{BOB}$
- température de recuit base : $T_{RB}$
- temps de maintien à $T_{RB}$ : $t_{RB}$
- taux de réduction au laminage à froid
- vitesse de chauffe : $V_C$
- température de maintien : $T_{soaking}$
- temps de maintien à $T_{soaking}$ : $t_{soaking}$
- vitesse de refroidissement : $V_{ref}$
- température de fin de refroidissement $T_{OA}$
- temps de maintien à la température $T_{OA}$ : $t_{OA}$
- les températures calculées avec les relations 1 et 2

Tableau 2 : Conditions de recuit des exemples et références

| Acier | ID | $T_{rech}$ (°C) | $T_{fl}$ (°C) | $T_{B0B}$ (°C) | $T_{RB}$ (°C) | $t_{RB}$ (s) | Taux de réduction (%) | $V_C$ (°C/s) | $T_{Soaking}$ (°C) | $V_{ref}$ (°C/s) | $t_{Soaking}$ (s) | $T_{0A}$ (°C) | $t_{0A}$ (s) | T1 (°C) | T2 (°C) | Relation 1 | Relation 2 |
|---|---|---|---|---|---|---|---|---|---|---|---|---|---|---|---|---|---|
| A | A_1 | 1250 | 967 | 576 | 550 | 6 | 67 | 5 | 830 | 95 | 180 | 350 | 1000 | -115 | -114 | 752 | 751 |
| A | A_2 | 1250 | 967 | 576 | 550 | 6 | 67 | 5 | 830 | 95 | 180 | 400 | 500 | -115 | -114 | 833 | 832 |
| A | A_3 | 1250 | 967 | 576 | 550 | 6 | 67 | 5 | 830 | 95 | 180 | 425 | 500 | -115 | -114 | 874 | 872 |
| A | A_4 | 1250 | 967 | 576 | 550 | 6 | 67 | 5 | 900 | 95 | 180 | 350 | 1000 | -115 | -114 | 752 | 751 |
| A | A_5 | 1250 | 967 | 576 | 550 | 6 | 67 | 5 | 900 | 95 | 180 | 400 | 500 | -115 | -114 | 833 | 832 |
| A | A_6 | 1250 | 967 | 576 | 550 | 6 | 67 | 5 | 900 | 95 | 180 | 425 | 500 | -115 | -114 | 874 | 872 |
| A | A_7 | 1250 | 967 | 576 | 650 | 6 | 67 | 5 | 830 | 95 | 180 | 400 | 500 | -115 | -114 | 833 | 832 |
| A | A_8 | 1250 | 967 | 576 | 650 | 6 | 67 | 5 | 900 | 95 | 180 | 400 | 500 | -115 | -114 | 833 | 832 |
| B | B_1 | 1245 | 939 | 564 | 550 | 6 | 67 | 5 | 790 | 95 | 70 | 350 | 1000 | -125 | -111 | 769 | 747 |
| B | B_2 | 1245 | 939 | 564 | 550 | 6 | 67 | 5 | 790 | 95 | 70 | 400 | 500 | -125 | -111 | 850 | 828 |
| B | B_3 | 1245 | 939 | 564 | 550 | 6 | 67 | 5 | 790 | 95 | 70 | 425 | 500 | -125 | -111 | 890 | 868 |
| B | B_4 | 1245 | 939 | 564 | 550 | 6 | 67 | 5 | 790 | 95 | 70 | 450 | 500 | -125 | -111 | 931 | 909 |
| B | B_5 | 1245 | 939 | 564 | 550 | 6 | 67 | 5 | 830 | 95 | 180 | 350 | 1000 | -125 | -111 | 769 | 747 |
| B | B_6 | 1245 | 939 | 564 | 550 | 6 | 67 | 5 | 830 | 95 | 180 | 400 | 500 | -125 | -111 | 850 | 828 |
| B | B_7 | 1245 | 939 | 564 | 550 | 6 | 67 | 5 | 830 | 95 | 180 | 425 | 500 | -125 | -111 | 890 | 868 |
| B | B_8 | 1245 | 939 | 564 | 550 | 6 | 67 | 5 | 830 | 95 | 180 | 450 | 500 | -125 | -111 | 931 | 909 |
| B | B_9 | 1245 | 939 | 564 | 550 | 6 | 67 | 5 | 900 | 95 | 180 | 350 | 1000 | -125 | -111 | 769 | 747 |
| B | B_10 | 1245 | 939 | 564 | 550 | 6 | 67 | 5 | 900 | 95 | 180 | 400 | 500 | -125 | -111 | 850 | 828 |
| B | B_11 | 1245 | 939 | 564 | 550 | 6 | 67 | 5 | 900 | 95 | 180 | 425 | 500 | -125 | -111 | 890 | 868 |
| B | B_12 | 1245 | 939 | 564 | 550 | 6 | 67 | 5 | 900 | 95 | 180 | 450 | 500 | -125 | -111 | 931 | 909 |
| C | C_1 | 1248 | 955 | 570 | 550 | 6 | 67 | 5 | 790 | 95 | 70 | 350 | 1000 | -136 | -95 | 787 | 720 |
| C | C_2 | 1248 | 955 | 570 | 550 | 6 | 67 | 5 | 790 | 95 | 70 | 400 | 500 | -136 | -95 | 868 | 801 |
| C | C_3 | 1248 | 955 | 570 | 550 | 6 | 67 | 5 | 790 | 95 | 70 | 425 | 500 | -136 | -95 | 908 | 842 |
| C | C_4 | 1248 | 955 | 570 | 550 | 6 | 67 | 5 | 790 | 95 | 70 | 450 | 500 | -136 | -95 | 948 | 882 |
| C | C_5 | 1248 | 955 | 570 | 550 | 6 | 67 | 5 | 830 | 95 | 180 | 350 | 1000 | -136 | -95 | 787 | 720 |

(suite)

| Acier | ID | $T_{rech}$ (°C) | $T_{fl}$ (°C) | $T_{B0B}$ (°C) | $T_{RB}$ (°C) | $t_{RB}$ (s) | Taux de réduction (%) | $V_C$ (°C/s) | $T_{Soaking}$ (°C) | $V_{ref}$ (°C/s) | $t_{Soaking}$ (s) | $T_{0A}$ (°C) | $t_{0A}$ (s) | T1 (°C) | T2 (°C) | Relation 1 | Relation 2 |
|---|---|---|---|---|---|---|---|---|---|---|---|---|---|---|---|---|---|
| C | C_6 | 1248 | 955 | 570 | 550 | 6 | 67 | 5 | 830 | 95 | 180 | 400 | 500 | -136 | -95 | 868 | 801 |
| C | C_7 | 1248 | 955 | 570 | 550 | 6 | 67 | 5 | 830 | 95 | 180 | 425 | 500 | -136 | -95 | 908 | _842_ |
| C | C_8 | 1248 | 955 | 570 | 550 | 6 | 67 | 5 | 830 | 95 | 180 | _450_ | 500 | -136 | -95 | 948 | _882_ |
| C | C_9 | 1248 | 955 | 570 | 550 | 6 | 67 | 5 | 900 | 95 | 180 | _350_ | 1000 | -136 | -95 | _787_ | 720 |

Tableau 2 (suite) : Conditions de recuit des exemples et références

| Acier | ID | $T_{rech}$ (°C) | $T_{fl}$ (°C) | $T_{B0B}$ (°C) | $T_{RB}$ (°C) | $t_{RB}$ (s) | Taux de réduction (%) | $V_C$ (°C/s) | $T_{Soaking}$ (°C) | $V_{ref}$ (°C/s) | $t_{Soaking}$ (s) | $T_{0A}$ (°C) | $t_{0A}$ (s) | T1 (°C) | T2 (°C) | Relation 1 | Relation 2 |
|---|---|---|---|---|---|---|---|---|---|---|---|---|---|---|---|---|---|
| C | C_10 | 1248 | 955 | 570 | 550 | 6 | 67 | 5 | 900 | 95 | 180 | 400 | 500 | -136 | -95 | <u>868</u> | 801 |
| C | C_11 | 1248 | 955 | 570 | 550 | 6 | 67 | 5 | 900 | 95 | 180 | 425 | 500 | -136 | -95 | 908 | <u>842</u> |
| C | C_12 | 1248 | 955 | 570 | 330 | 6 | 67 | 5 | 900 | 95 | 180 | <u>450</u> | 500 | -136 | -95 | 948 | <u>882</u> |
| C | C_13 | 1248 | 955 | 570 | 650 | 6 | 67 | 5 | 790 | 95 | 70 | 400 | 500 | -136 | -95 | <u>868</u> | 801 |
| C | C_14 | 1248 | 955 | 570 | 650 | 6 | 67 | 5 | 830 | 95 | 180 | 400 | 500 | -136 | -95 | <u>868</u> | 801 |
| C | C_15 | 1248 | 955 | 570 | 650 | 6 | 67 | 5 | 900 | 95 | 180 | 400 | 500 | -136 | -95 | <u>868</u> | 801 |
| D | D_1 | 1254 | 983 | 562 | 550 | 6 | 67 | 5 | 770 | 95 | 70 | <u>350</u> | 1000 | -171 | -69 | 844 | <u>679</u> |
| D | D_2 | 1254 | 983 | 562 | 550 | 6 | 67 | 5 | 770 | 95 | 70 | 400 | 500 | -171 | -69 | <u>925</u> | 760 |
| D | D_3 | 1254 | 983 | 562 | 550 | 6 | 67 | 5 | 770 | 95 | 70 | 425 | 500 | -171 | -69 | <u>966</u> | 800 |
| D | D_4 | 1254 | 983 | 562 | 550 | 6 | 67 | 5 | 770 | 95 | 70 | <u>450</u> | 500 | -171 | -69 | 1006 | <u>841</u> |
| D | D_5 | 1254 | 983 | 562 | 550 | 6 | 67 | 5 | 830 | 95 | 180 | <u>350</u> | 1000 | -171 | -69 | 844 | <u>679</u> |
| D | D_6 | 1254 | 983 | 562 | 550 | 6 | 67 | 5 | 830 | 95 | 180 | 400 | 500 | -171 | -69 | 925 | <u>760</u> |
| D | D_7 | 1254 | 983 | 562 | 550 | 6 | 67 | 5 | 830 | 95 | 180 | 425 | 500 | -171 | -69 | <u>966</u> | 800 |
| D | D_8 | 1254 | 983 | 562 | 550 | 6 | 67 | 5 | 830 | 95 | 180 | <u>450</u> | 500 | -171 | -69 | 1006 | 841 |
| D | D_9 | 1254 | 983 | 562 | 550 | 6 | 67 | 5 | 900 | 95 | 180 | <u>350</u> | 1000 | -171 | -69 | 844 | <u>679</u> |
| D | D_10 | 1254 | 983 | 562 | 550 | 6 | 67 | 5 | 900 | 95 | 180 | 400 | 500 | -171 | -69 | 925 | <u>760</u> |
| D | D_11 | 1254 | 983 | 562 | 550 | 6 | 67 | 5 | 900 | 95 | 180 | 425 | 500 | -171 | -69 | <u>966</u> | 800 |
| D | D_12 | 1254 | 983 | 562 | 550 | 6 | 67 | 5 | 900 | 95 | 180 | <u>450</u> | 500 | -171 | -69 | 1006 | 841 |
| D | D_13 | 1254 | 983 | 562 | 650 | 6 | 67 | 5 | 830 | 95 | 180 | 400 | 500 | -171 | -69 | <u>925</u> | 760 |
| D | D_14 | 1254 | 983 | 562 | 650 | 6 | 67 | 5 | 900 | 95 | 180 | 400 | 500 | -171 | -69 | 925 | <u>760</u> |
| E | E_1 | 1266 | 932 | 558 | N.R. | N.R. | 62 | 5 | 880 | 95 | 180 | 425 | 500 | -128 | -110 | <u>895</u> | 865 |
| F | F_1 | 1234 | 946 | 563 | N.R. | N.R. | 63 | 5 | 900 | 95 | 90 | <u>300</u> | 1800 | -184 | -105 | 783 | <u>656</u> |
| F | F_2 | 1234 | 946 | 563 | N.R. | N.R. | 63 | 5 | 900 | 95 | 90 | 400 | 1800 | -184 | -105 | 945 | <u>818</u> |
| G | G_1 | 1270 | 951 | 553 | N.R. | N.R. | 64 | 5 | 860 | 95 | 180 | <u>325</u> | 1200 | -170 | -107 | 801 | <u>699</u> |
| G | G_2 | 1270 | 951 | 553 | N.R. | N.R. | 64 | 5 | 860 | 95 | 180 | <u>350</u> | 1200 | -170 | -107 | <u>842</u> | 739 |

(suite)

| Acier | ID | $T_{rech}$ (°C) | $T_{fl}$ (°C) | $T_{B0B}$ (°C) | $T_{RB}$ (°C) | $t_{RB}$ (s) | Taux de réduction (%) | $V_C$ (°C/s) | $T_{Soaking}$ (°C) | $V_{ref}$ (°C/s) | $t_{Soaking}$ (s) | $T_{0A}$ (°C) | $t_{0A}$ (s) | T1 (°C) | T2 (°C) | Relation 1 | Relation 2 |
|---|---|---|---|---|---|---|---|---|---|---|---|---|---|---|---|---|---|
| G | G_3 | 1270 | 951 | 553 | N.R. | N.R. | 64 | 5 | 860 | 95 | 180 | 375 | 1200 | -170 | -107 | 882 | 780 |
| G | G_4 | 1270 | 951 | 553 | N.R. | N.R. | 64 | 5 | 860 | 95 | 180 | 400 | 1200 | -170 | -107 | 923 | 820 |
| G | G_5 | 1270 | 951 | 553 | N.R. | N.R. | 64 | 5 | 860 | 95 | 180 | 425 | 1200 | -170 | -107 | 963 | 861 |
| G | G_6 | 1270 | 951 | 553 | N.R. | N.R. | 64 | 5 | 860 | 95 | 180 | 450 | 1200 | -170 | -107 | 1004 | 901 |

EP 3 024 951 B1

Les références A1 à A8, B1 à B5, B7 à B12, C1 à C5, C7 à C10, C12, C13, C15, D1, D3 à D5, D8, D9, D12, F1, G1, G2, G5 et G6 du tableau 2 désignent les tôles d'acier fabriquées selon des conditions non conformes à l'invention à partir d'aciers dont les compositions sont données dans le tableau 1. Les paramètres non conformes à l'invention sont soulignés.

On note que les deux références D1 et D5 sont non conformes à l'invention car la température de fin de refroidissement $T_{OA}$ est inférieure à 360°C, ce qui favoriserait une grande quantité de ferrite bainitique et une faible quantité d'austénite résiduelle limitant ainsi la ductilité de la tôle.

On note également que les deux références C12 et D12 sont non conformes à l'invention car la température de fin de refroidissement $T_{OA}$ est supérieure à 440°C, ce qui favoriserait une faible quantité de ferrite bainitique et une austénite résiduelle instable limitant ainsi la ductilité et la limite élastique de la tôle.

On note encore que les références A5, A6, A8, B10, B11, C10 et C15 sont non conformes à l'invention car la température $T_{soaking}$ est inférieure à la température calculée par la relation 1, dépendante de leur composition respective.

On note aussi que les références A2, A3, A7, B2, B3, B7, C2, C3, C7, C13, D3 et G5 sont non conformes à l'invention car la température $T_{soaking}$ est supérieure à la température calculée par la relation 2, dépendante également de leur composition respective.

On note enfin que les références A1, A4, B1, B4, B5, B7, B9, B12, C1, C4, C5, C8, C9, D4, D8, D9, F1, G1, G2 et G6 sont non conformes à l'invention la température de fin de refroidissement $T_{OA}$ est en dehors de la gamme 360°C - 440°C et que la température de maintien $T_{soaking}$ est soit inférieure à la température calculée avec la relation 1, soit supérieure à la température calculée avec la relation 2, ce qui entraine les conséquences néfastes susmentionnés.

Les exemples B6, C6, C11, C14, D2, D6, D7, D10, D11, D13, D14, E1, F2, G3 et G4 sont ceux selon l'invention.

On mesure ensuite les propriétés mécaniques en utilisant une éprouvette de type ISO 12,5x50. Les tractions uni-axiales permettant d'obtenir ces propriétés mécaniques sont faites dans le sens parallèle à celui du laminage à froid.

Les propriétés mécaniques de traction obtenues ont été portées au tableau 3 ci-dessous avec les abréviations suivantes :

- la limite d'élasticité : Re
- la résistance mécanique : Rm
- l'allongement uniforme : Al. Unif.
- Allongement total : Al. Total.

Tableau 3 : Propriétés mécaniques des références et de l'invention

| Acier | ID | Re (MPa) | Rm (MPa) | Al. Unif. (%) | Al.Total. (%) | Re/Rm | RexAl.Unif. (MPa.%) |
|-------|------|----------|----------|---------------|---------------|-------|---------------------|
| A | A_1 | <u>659</u> | 969 | <u>9.3</u> | 12.7 | 0.68 | 6129 |
| A | A_2 | <u>581</u> | <u>862</u> | 16.4 | 21.6 | 0.67 | 9528 |
| A | A_3 | <u>530</u> | <u>852</u> | 16.5 | 18.2 | 0.62 | 8745 |
| A | A_4 | 1076 | 1286 | <u>2.4</u> | 3.7 | 0.84 | 2582 |
| A | A_5 | 843 | 1025 | <u>9.4</u> | 14.5 | 0.82 | 7924 |
| A | A_6 | 762 | 968 | <u>10.0</u> | 12.0 | 0.79 | 7620 |
| A | A_7 | <u>569</u> | <u>852</u> | 21.0 | 26.2 | 0.67 | 11949 |
| A | A_8 | 848 | 1021 | <u>7.5</u> | 12.5 | 0.83 | 6360 |
| B | B_1 | <u>594</u> | 928 | 20.2 | 25.2 | 0.64 | 11999 |
| B | B_2 | <u>578</u> | <u>880</u> | 23.7 | 28.7 | 0.66 | 13699 |
| B | B_3 | <u>581</u> | 924 | 21.5 | 26.1 | 0.63 | 12492 |
| B | B_4 | <u>539</u> | 966 | 15.6 | 18.6 | 0.56 | 8408 |
| B | B_5 | 835 | 1115 | <u>6.9</u> | 11.4 | 0.75 | 5762 |
| B | B_6 | 714 | 966 | 12.8 | 17.5 | 0.74 | 9139 |
| B | B_7 | <u>658</u> | 954 | 16.2 | 19.1 | 0.69 | 10660 |
| B | B_8 | <u>574</u> | 974 | 12.9 | 16.9 | 0.59 | 7405 |
| B | B_9 | 1171 | 1363 | <u>2.7</u> | 5.7 | 0.86 | 3162 |

(suite)

| Acier | ID | Re (MPa) | Rm (MPa) | Al. Unif. (%) | Al.Total. (%) | Re/Rm | RexAl.Unif. (MPa.%) |
|-------|------|----------|----------|---------------|---------------|-------|---------------------|
| B | B_10 | 878 | 1069 | 7.4 | 10.0 | 0.82 | 6497 |
| B | B_11 | 785 | 1013 | 10.9 | 153 | 0.77 | 8557 |
| B | B_12 | 678 | 1001 | 8.5 | 10.5 | 0.68 | 5763 |
| C | C_1 | 577 | 902 | 13.9 | 16.4 | 0.64 | 8020 |
| C | C_2 | 578 | 889 | 24.5 | 29.2 | 0.65 | 14161 |
| C | C_3 | 569 | 928 | 22.3 | 27.6 | 0.61 | 12689 |
| C | C_4 | 524 | 930 | 13.9 | 15.6 | 0.56 | 7284 |
| C | C_5 | 725 | 1016 | 8.5 | 12.4 | 0.71 | 6163 |
| C | C_6 | 623 | 920 | 19.4 | 25.0 | 0.68 | 12086 |
| C | C_7 | 641 | 950 | 18.8 | 24.2 | 0.67 | 12051 |
| C | C_8 | 549 | 959 | 13.7 | 17.3 | 0.57 | 7521 |
| C | C_9 | 1152 | 1345 | 2.3 | 3.4 | 0.86 | 2650 |
| C | C_10 | 890 | 1064 | 9.1 | 13.8 | 0.84 | 8099 |
| C | C_11 | 800 | 1024 | 12.1 | 15.1 | 0.78 | 9680 |
| C | C_12 | 694 | 1001 | 9.8 | 13.9 | 0.69 | 6801 |
| C | C_13 | 583 | 856 | 20.0 | 22.6 | 0.68 | 11660 |
| C | C_14 | 711 | 931 | 13.7 | 16.9 | 0.76 | 9741 |
| C | C_15 | 878 | 1052 | 7.7 | 10.1 | 0.83 | 6761 |
| D | D_1 | 674 | 1129 | 15.2 | 16.9 | 0.60 | 10245 |
| D | D_2 | 708 | 1129 | 15.2 | 15.6 | 0.63 | 10762 |
| D | D_3 | 548 | 1211 | 13.1 | 13.2 | 0.45 | 7179 |
| D | D_4 | 492 | 1269 | 5.9 | 6.0 | 0.39 | 2903 |
| D | D_5 | 935 | 1221 | 4.8 | 7.3 | 0.77 | 4488 |
| D | D_6 | 759 | 1097 | 14.5 | 17.9 | 0.69 | 11006 |
| D | D_7 | 747 | 1130 | 14.0 | 14.2 | 0.66 | 10458 |
| D | D_8 | 519 | 1212 | 12.0 | 14.1 | 0.43 | 6228 |
| D | D_9 | 1115 | 1386 | 5.1 | 7.6 | 0.80 | 5687 |
| D | D_10 | 863 | 1168 | 12.1 | 15.4 | 0.74 | 10442 |
| D | D_11 | 755 | 1139 | 12.8 | 16.0 | 0.66 | 9664 |
| D | D_12 | 507 | 1192 | 8.9 | 9.1 | 0.43 | 4512 |
| D | D_13 | 810 | 1078 | 15.4 | 19.3 | 0.75 | 12474 |
| D | D_14 | 839 | 1137 | 12.9 | 17.0 | 0.74 | 10823 |
| E | E_1 | 799 | 1041 | 13.4 | 20.9 | 0.74 | 10707 |
| F | F_1 | 1427 | 1712 | 2.7 | 5.4 | 0.74 | 3780 |
| F | F_2 | 879 | 1275 | 12.1 | 16.1 | 0.74 | 10630 |
| G | G_1 | 1127 | 1565 | 5.5 | 8.6 | 0.74 | 6142 |
| G | G_2 | 1013 | 1381 | 8.8 | 12.6 | 0.74 | 8914 |
| G | G_3 | 845 | 1294 | 12.1 | 14.8 | 0.74 | 10225 |

14

(suite)

| Acier | ID | Re (MPa) | Rm (MPa) | Al. Unif. (%) | Al.Total. (%) | Re/Rm | RexAl.Unif. (MPa.%) |
|-------|------|----------|----------|---------------|---------------|-------|---------------------|
| G | G_4 | 701 | 1289 | 12.1 | 14.5 | 0.74 | 8482 |
| G | G_5 | <u>661</u> | 1394 | <u>10.4</u> | 11.2 | 0.74 | 6869 |
| G | G_6 | 780 | 1517 | <u>6.2</u> | 6.2 | 0.74 | 4836 |

Les références A1 à A8, B1 à B5, B7 à B12, C1 à C5, C7 à C10, C12, C13, C15, D1, D3 à D5, D8, D9, D12, F1, G1, G2, G5 et G6 du tableau 3 désignent les tôles d'acier fabriquées selon des conditions décrites au tableau 2 à partir d'aciers dont les compositions sont données au tableau 1. Les propriétés mécaniques non conformes à l'invention sont soulignées.

Les exemples B6, C6, C11, C14, D2, D6, D7, D10, D11, D13, D14, E1, F2, G3 et G4 sont ceux selon l'invention.

On note que les références B1, B3, B4, B7, B8, C1, C3, C4, C7, C8, D1, D3 et D8 sont non conformes à l'invention car la limite d'élasticité Re est inférieure à 700MPa, ce qui traduit soit une quantité de ferrite bainitique trop faible due à une température de fin de refroidissement $T_{OA}$ supérieure à 440°C ou une quantité trop importante de ferrite polygonale due à une température de maintien $T_{soaking}$ inférieure à celle calculée avec la relation 1.

On note également que les deux références A4 à A6, A8, B2, B11, C5, C9, C10, C15, D5, D9, F1, G1, G2 et G6 sont non conformes à l'invention car l'allongement uniforme est inférieur à 12%, ce qui traduit soit une quantité trop faible de ferrite polygonale due à une température de maintien $T_{soaking}$ supérieure à celle calculée avec la relation 2, soit une quantité d'austénite résiduelle trop faible due à une température de fin de refroidissement $T_{OA}$ inférieure à 360°C.

On note encore que les références A1, B5, B6, B12 et C12 sont non conformes à l'invention car la limite d'élasticité Re et l'allongement uniforme sont inférieures à 700 MPa et 12% respectivement, ce qui traduit une quantité d'îlots MA trop importante due à une température de fin de refroidissement supérieure à 440°C.

On note enfin que les références A2, A3, A7, B2, C2, C13, D4, D12 et G5 sont non conformes à l'invention car la limite d'élasticité Re et la résistance mécanique Rm sont inférieures à 700 MPa et 900 MPa respectivement, ce qui traduit une quantité de ferrite polygonale trop importante et par conséquent une température de maintien $T_{soaking}$ inférieure à la température calculée avec la relation 1, et une quantité d'îlots MA trop faible due à une température de fin de refroidissement $T_{OA}$ trop faible.

L'invention permet de mettre à disposition une tôle d'acier apte au dépôt d'un revêtement de Zinc, ou d'alliage de Zn, en particulier par les procédés usuels d'électro-zingage.

L'invention permet aussi de mettre à disposition une tôle d'acier apte au dépôt d'un revêtement de Zinc ou d'alliage de Zn, en particulier par un procédé de trempe à chaud dans un bain de Zn liquide suivi ou pas d'un traitement thermique d'alliation.

Elle permet enfin de mettre à disposition un acier présentant une bonne aptitude au soudage au moyen des procédés d'assemblage usuels tels que, par exemple et à titre non limitatif, le soudage par résistance par points.

Les tôles d'aciers selon l'invention seront utilisées avec profit pour la fabrication de pièces de structures, éléments de renforts, de sécurité, anti abrasives ou de disques de transmissions pour applications dans les véhicules terrestres à moteur.

**Revendications**

1. Tôle d'acier laminée à froid et recuite de résistance mécanique supérieure ou égale à 900 MPa, de limite élastique supérieure à 700 MPa et d'allongement uniforme supérieur ou égal à 12% dont la composition comprend, les teneurs étant exprimées en pourcentage du poids,

   $$0,26\% \leq C \leq 0,45\%$$

   $$1,0\% \leq Mn \leq 3,0\%$$

   $$1,0\% \leq Si \leq 3,0\%$$

   $$Al \leq 0,1\ \%$$

   $$Cr \leq 1,5\%$$

S $\leq 0,005\%$

P $\leq 0,020\%$

Nb$\leq 0,1\%$

Ti$\leq 0,02\%$

V$\leq 0,015\%$

N$\leq 0,01\%$

le reste de la composition étant constitué de fer et d'impuretés inévitables résultant de l'élaboration, étant entendu que 256xC + 47xMn +150xCr + 2260xNb > 142, la microstructure étant constituée, en proportions surfaciques, de 13 à 25 % d'austénite résiduelle, de 13 à 30% d'îlots de martensite et d'austénite résiduelle, le solde étant constitué de bainite et éventuellement de ferrite.

**2.** Tôle d'acier selon la revendication 1 dont la composition comprend, la teneur étant exprimée en poids

$0,26\% \leq C \leq 0,35\%$

**3.** Tôle d'acier selon la revendication 1 ou 2 dont la composition comprend, la teneur étant exprimée en poids

$1,4\% \leq Mn \leq 2,6\%$

**4.** Tôle d'acier selon l'une quelconque des revendications 1 à 3 dont la composition comprend, la teneur étant exprimée en poids

$1,4\% \leq Si \leq 1,8\%$

**5.** Tôle d'acier selon l'une quelconque des revendications 1 à 4 dont la composition comprend, la teneur étant exprimée en poids :

$Cr \leq 0,5\%$

**6.** Tôle d'acier selon l'une quelconque des revendications 1 à 5 dont la composition comprend, la teneur étant exprimée en poids :

$Nb \leq 0,05\%$

**7.** Tôle d'acier selon l'une quelconque des revendications 1 à 6 dont la microstructure comprend au maximum 30% de ferrite.

**8.** Tôle d'acier selon l'une quelconque des revendications 1 à 7 dont l'allongement total est supérieur à 14%.

**9.** Tôle d'acier selon l'une quelconque des revendications 1 à 8 comportant un revêtement de Zinc ou d'alliage de zinc.

**10.** Procédé de fabrication d'une tôle d'acier laminée à froid et recuite de résistance supérieure ou égale à 900 MPa, de limite élastique supérieure à 700 MPa et d'allongement supérieur ou égal à 12% comprenant les étapes selon lesquelles :

- on approvisionne un acier de composition selon l'une quelconque des revendications 1 à 6, puis
- on coule ledit acier sous forme de demi-produit, puis
- on porte ledit demi-produit à une température $T_{rech}$ comprise entre 1150°C et 1275°C pour obtenir un demi-produit réchauffé, puis
- on lamine à chaud ledit demi-produit réchauffé, la température de fin de laminage à chaud $T_{fl}$ étant supérieure ou égale à 850°C pour obtenir une tôle laminée à chaud, puis
- on bobine ladite tôle laminée à chaud à une température $T_{bob}$ comprise entre 540 et 590°C pour obtenir une tôle laminée à chaud bobinée puis,

- on refroidit ladite tôle laminée à chaud bobinée jusqu'à la température ambiante, puis,
- optionnellement, on effectue un recuit dit base de ladite tôle laminée à chaud bobinée de telle sorte que la tôle soit recuite à une température comprise entre 400°C et 700°C pendant une durée comprise entre 5 et 24 heures,
- on débobine et on décape ladite tôle laminée à chaud bobinée de façon à obtenir une tôle laminée à chaud apte au laminage à froid, puis
- on lamine à froid ladite tôle laminée à chaud apte au laminage à froid avec un taux de réduction compris entre 30 et 80% de façon à obtenir une tôle laminée à froid, puis,
- on recuit ladite tôle laminée à froid en la réchauffant à une vitesse Vc comprise entre 2 et 50°C/s jusqu'à une température $T_{soaking}$ comprise entre 760 et 1100°C, pendant une durée $t_{soaking}$ comprise entre 60 et 600 secondes, puis,
- on refroidit ladite tôle laminée à froid en la soumettant à un refroidissement à une vitesse comprise entre 20 et 1000°C/s tel que la température de fin de refroidissement $T_{OA}$ soit comprise entre 360°C et 440°C, étant entendu que:

$$T_{soaking} < 1,619 (T_{OA} - T1) \text{ où } T1 = -206\,C - 43\,Mn - 164\,Cr - 896\,Nb.$$

$$T_{soaking} > 1,619 (T_{OA} - T2) \text{ où } T2 = 50\,C + 4\,Mn - 14\,Cr + 1364\,Nb - 132.$$

avec les températures en °C et les compositions chimiques en pourcent massique,
- on maintient ladite tôle laminée à froid dans la plage de température allant de 360 à 440°C pendant une durée tOA comprise entre 100 et 2000 secondes.

11. Procédé de fabrication selon la revendication 10 dans lequel on maintient ladite tôle à la température de fin de refroidissement $T_{OA}$ de manière isotherme entre 360 et 440°C et entre 100 et 2000 secondes.

12. Procédé de fabrication selon l'une quelconque des revendications 10 ou 11, pour lequel ladite température $T_{fl}$ est supérieure ou égale à 900°C.

13. Procédé de fabrication d'une tôle revêtue selon lequel on approvisionne une tôle laminée à froid recuite selon l'une quelconque des revendications 10 à 12 et qu'on refroidit ladite tôle jusqu'à l'ambiante avant de la revêtir de Zinc ou d'alliage de Zinc.

14. Procédé de fabrication d'une tôle revêtue selon lequel on approvisionne une tôle laminée à froid recuite selon l'une quelconque des revendications 10 à 13 et qu'on revêt ensuite ladite tôle laminée à froid recuite de Zinc ou d'alliage de Zinc par un procédé de galvanisation au trempé à chaud avant refroidissement jusqu'à l'ambiante.

15. Procédé de fabrication d'une tôle revêtue selon lequel on approvisionne une tôle laminée à froid recuite selon l'une quelconque des revendications 10 à 14 et qu'on revêt ensuite ladite tôle laminée à froid recuite d'Al ou d'alliage d'Al par un procédé d'aluminiage au trempé à chaud avant refroidissement jusqu'à l'ambiante.

16. Procédé de fabrication d'une tôle revêtue selon lequel on approvisionne une tôle laminée à froid recuite selon l'une quelconque des revendications 10 à 15, et que l'on relamine à froid avec un taux de laminage à froid compris entre 0,1 et 3%.

17. Procédé de fabrication d'une tôle laminée à froid recuite et éventuellement revêtue selon l'une quelconque des revendications 10 à 16, dans lequel on recuit ensuite ladite tôle à une température de maintien $T_{base}$ comprise entre 150°C et 190°C pendant un temps de maintien $t_{base}$ compris entre 10h et 48h.

18. Procédé de fabrication d'une pièce à partir d'une tôle selon la revendication 10 dans lequel on emboutit à chaud la tôle après le recuit à la température $T_{soaking}$ et avant le refroidissement à la vitesse Vc.

19. Utilisation d'une tôle laminée à froid et recuite selon l'une quelconque des revendications 1 à 9, ou d'une tôle fabriquée par un procédé selon l'une quelconque des revendications 10 à 18 pour la fabrication de pièces pour véhicules.

**Patentansprüche**

1. Kaltgewalztes und geglühtes Stahlblech mit einer mechanischen Festigkeit von größer oder gleich 900 MPa, einer Streckgrenze von größer als 700 MPa und einer gleichmäßigen Dehnung von größer oder gleich 12 %, dessen Zusammensetzung folgendes aufweist, wobei der Gehalt jeweils in Gewichtsprozent ausgedrückt ist:

$0,26\% \leq C \leq 0,45\%$

$1,0\% \leq Mn \leq 3,0\%$

$1,0\% \leq Si \leq 3,0\%$

$Al \leq 0,1\%$

$Cr \leq 1,5\%$

$S \leq 0,005\%$

$P \leq 0,020\%$

$Nb \leq 0,1\%$

$Ti \leq 0,02\%$

$V \leq 0,015\%$

$N \leq 0,01\%$

wobei der Rest der Zusammensetzung aus Eisen und unvermeidbaren Verunreinigungen gebildet ist, die aus der Bearbeitung resultieren, wobei 256xC + 47xMn +150xCr + 2260xNb > 142, wobei die Mikrostruktur in Flächenverhältnissen aus 13 bis 25% Restaustenit, 13 bis 30% Martensitinseln und Restaustenit gebildet ist, wobei der Rest aus Bainit und gegebenenfalls Ferrit gebildet ist.

2. Stahlblech gemäß Anspruch 1, dessen Zusammensetzung folgendes aufweist, wobei der Gehalt in Gewicht ausgedrückt ist:

$0,26\% \leq C \leq 0,35 \%$.

3. Stahlblech gemäß Anspruch 1 oder 2, dessen Zusammensetzung folgendes aufweist, wobei der Gehalt in Gewicht ausgedrückt ist:

$1,4\% \leq Mn \leq 2,6\%$.

4. Stahlblech gemäß irgendeinem der Ansprüche 1 bis 3, dessen Zusammensetzung folgendes aufweist, wobei der Gehalt in Gewicht ausgedrückt ist:

$1,4\% \leq Si \leq 1,8\%$.

5. Stahlblech gemäß irgendeinem der Ansprüche 1 bis 4, dessen Zusammensetzung folgendes aufweist, wobei der Gehalt in Gewicht ausgedrückt ist:

$Cr \leq 0,5\%$

6. Stahlblech gemäß irgendeinem der Ansprüche 1 bis 5, dessen Zusammensetzung folgendes aufweist, wobei der Gehalt in Gewicht ausgedrückt ist:

Nb ≤ 0,05%

7.  Stahlblech gemäß irgendeinem der Ansprüche 1 bis 6, dessen Mikrostruktur maximal 30% Ferrit aufweist.

8.  Stahlblech gemäß irgendeinem der Ansprüche 1 bis 7, dessen Gesamtdehnung größer als 14% ist.

9.  Stahlblech gemäß irgendeinem der Ansprüche 1 bis 8, aufweisend eine Beschichtung aus Zink oder einer Zinklegierung.

10. Verfahren zum Herstellen eines kaltgewalzten und geglühten Stahlblechs mit einer Festigkeit von größer oder gleich 900 MPa, einer Streckgrenze von größer als 700 MPa und einer Dehnung von größer oder gleich 12%, aufweisend die Schritte, bei denen:

    - ein Stahl mit einer Zusammensetzung gemäß irgendeinem der Ansprüche 1 bis 6 bereitgestellt wird, anschließend
    - der Stahl in Form eines Halbproduktes gegossen wird, anschließend
    - das Halbprodukt auf eine Temperatur $T_{rech}$ von zwischen 1150°C und 1275°C gebracht wird, um ein erhitztes Halbprodukt zu erhalten,
    - anschließend das erhitzte Halbprodukt warmgewalzt wird, wobei die Warmwalz-Endtemperatur $T_{fl}$ größer oder gleich 850°C ist, um ein warmgewalztes Blech zu erhalten, anschließend
    - das warmgewalzte Blech bei einer Temperatur $T_{bob}$ von zwischen 540 und 590°C aufgewickelt wird, um ein aufgewickeltes warmgewalztes Blech zu erhalten, anschließend
    - das warmgewalzte aufgewickelte Blech auf die Umgebungstemperatur abgekühlt wird, anschließend
    - optional ein als Basisglühen bezeichnetes Glühen des warmgewalzten aufgewickelten Blechs durchgeführt wird, so dass das Blech bei einer Temperatur von zwischen 400°C und 700°C während einer Dauer von zwischen 5 und 24 Stunden geglüht wird,
    - das aufgewickelte warmgewalzte Blech abgewickelt und dekapiert wird, um ein warmgewalztes Blech zu erhalten, das für ein Kaltwalzen geeignet ist, anschließend
    - das warmgewalzte Blech, das für das Kaltwalzen geeignet ist, mit einer Dickenabnahme von zwischen 30 und 80% kaltgewalzt wird, um ein kaltgewalztes Blech zu erhalten, anschließend
    - das kaltgewalzte Blech geglüht wird, wobei es mit einer Geschwindigkeit Vc von zwischen 2 und 50°C/s während einer Dauer $t_{soaking}$ von zwischen 60 und 600 Sekunden auf eine Temperatur $T_{soaking}$ von zwischen 760 und 1100°C erhitzt wird, anschließend
    - das kaltgewalzte Blech abgekühlt wird, indem es einer Abkühlung mit einer Geschwindigkeit von zwischen 20 und 1000°C/s unterzogen wird, so dass die Endabkühlungstemperatur $T_{OA}$ zwischen 360°C und 440°C liegt, wobei folgendes gilt:

    $$T_{soaking} < 1{,}619\ (T_{OA} - T1)\ \text{wobei}\ T1 = -206\ C - 43\ Mn - 164\ Cr - 896\ Nb.$$

    $$T_{soaking} > 1{,}619\ (T_{OA} - T2)\ \text{wobei}\ T2 = 50\ C + 4\ Mn - 14\ Cr + 1364\ Nb - 132.$$

    wobei die Temperaturen in °C und die chemischen Zusammensetzungen in Masse-% sind,
    - das kaltgewalzte Blech während einer Dauer tOA von zwischen 100 und 2000 Sekunden im Temperaturbereich von 360 bis 440°C gehalten wird.

11. Herstellungsverfahren gemäß Anspruch 10, wobei das Blech isotherm auf der Endabkühlungstemperatur $T_{OA}$ von zwischen 360 und 440°C und zwischen 100 und 2000 Sekunden gehalten wird.

12. Herstellungsverfahren gemäß irgendeinem der Ansprüche 10 oder 11, bei dem die Temperatur $T_{fl}$ größer oder gleich 900°C ist.

13. Herstellungsverfahren für ein beschichtetes Blech, bei dem ein kaltgewalztes geglühtes Blech gemäß irgendeinem der Ansprüche 10 bis 12 bereitgestellt wird und das Blech vor dem Beschichten mit Zink oder einer Zinklegierung auf die Umgebungstemperatur abgekühlt wird.

14. Herstellungsverfahren für ein beschichtetes Blech, bei dem ein kaltgewalztes geglühtes Blech gemäß irgendeinem der Ansprüche 10 bis 13 bereitgestellt wird und anschließend das kaltgewalzte geglühte Blech vor dem Abkühlen auf die Umgebungstemperatur mittels eines Feuerverzinkungsverfahrens mit Zink oder einer Zinklegierung beschichtet wird.

15. Herstellungsverfahren für ein beschichtetes Blech, bei dem ein kaltgewalztes geglühtes Blech gemäß irgendeinem der Ansprüche 10 bis 14 bereitgestellt wird und anschließend das kaltgewalzte geglühte Blech mittels eines Verfahrens zum Aluminieren mittels Heißtauchens vor dem Abkühlen auf die Umgebungstemperatur mit Al oder einer Al-Legierung beschichtet wird.

16. Herstellungsverfahren für ein beschichtetes Blech, bei dem ein kaltgewalztes geglühtes Blech gemäß irgendeinem der Ansprüche 10 bis 15 bereitgestellt wird und dieses mit einem Kaltwalzverhältnis von zwischen 0,1 und 3% erneut kaltgewalzt wird.

17. Herstellungsverfahren für ein kaltgewalztes geglühtes und möglicherweise beschichtetes Blech gemäß irgendeinem der Ansprüche 10 bis 16, wobei das Blech anschließend bei einer Haltetemperatur $T_{base}$ von zwischen 150°C und 190°C während einer Haltezeit $t_{base}$ von zwischen 10 h und 48 h geglüht wird.

18. Herstellungsverfahren für ein Teil aus einem Blech gemäß Anspruch 10, wobei das Blech nach dem Glühen bei der Temperatur $t_{soaking}$ und vor dem Abkühlen mit der Geschwindigkeit $V_c$ warmgepresst wird.

19. Verwendung eines kaltgewalzten und geglühten Blechs gemäß irgendeinem der Ansprüche 1 bis 9 oder eines Blechs, das mittels eines Verfahrens gemäß irgendeinem der Ansprüche 10 bis 18 hergestellt wird, für die Herstellung von Teilen für Fahrzeuge.

## Claims

1. The cold rolled and annealed steel sheet with mechanical strength of more than or equal to 900 MPa, an elastic limit of more than 700 MPa and uniform elongation of more than or equal to 12%, whose composition comprises, the contents being expressed in percentage of weight,

$$0.26\% \leq C \leq 0.45\%$$

$$1.0\% \leq Mn \leq 3.0\%$$

$$1.0 \leq Si \leq 3.0\%$$

$$Al \leq 0.1\%$$

$$Cr \leq 1.5\%$$

$$S \leq 0.005\%$$

$$P \leq 0.020\%$$

$$Nb \leq 0.1\%$$

$$Ti \leq 0.02\%$$

$$V \leq 0.015\%$$

$$N \leq 0.01\%$$

the rest of the composition consisting of iron and unavoidable impurities resulting from the production, with the proviso that 256xC + 47xMn + 150xCr + 2260xNb > 142, the microstructure consisting of, in surface proportions, 13 to 25% of residual austenite, 13 to 30% of residual martensite and austenite islets, the balance consisting of bainite and optionally ferrite.

2. Steel sheet according to claim 1, whose composition comprises, the content being expressed in percentage of weight

$$0.26\% \le C \le 0.35\%$$

3. Steel sheet according to claim 1 or 2, whose composition comprises, the content being expressed in percentage of weight

$$1.4\% \le Mn \le 2.6\%$$

4. Steel sheet according to any one of the claims 1 to 3, whose composition comprises, the content being expressed in percentage of weight

$$1.4\% \le Si \le 1.8\%$$

5. Steel sheet according to any one of the claims 1 to 4, whose composition comprises, the content being expressed in percentage of weight:

$$Cr \le 0.5\%$$

6. Steel sheet according to any one of the claims 1 to 5, whose composition comprises, the content being expressed in percentage of weight:

$$Nb \le 0.05\%$$

7. Steel sheet according to any one of the claims 1 to 6, whose microstructure contains a maximum of 30% ferrite.

8. Steel sheet according to any one of the claims 1 to 7, whose total elongation is more than 14%.

9. Steel sheet according to any one of the claims 1 to 8 having a zinc or zinc alloy coating.

10. Manufacturing process of a cold rolled and annealed steel sheet with strength of greater than or equal to 900 MPa, an elastic limit of greater than 700 MPa and elongation of greater than or equal to 12% comprising the steps according to which:

- Composition steel is supplied according to any one of the claims 1 to 6, then
- said steel is cast in the form of semi-finished product, then
- said semi-finished product is brought to a temperature $T_{rech}$ between 1150°C to 1275°C to obtain a reheated semi-finished product, then
- said reheated semi-finished product is hot rolled, the end of hot rolling temperature $T_{f,}$ being greater than or equal to 850°C to obtain a hot rolled sheet, then
- said hot rolled sheet is wound at a temperature $T_{bob}$ between 540 and 590°C to obtain a wound hot rolled sheet, then,
- said wound hot rolled sheet is cooled till it reaches ambient temperature, then,
- optionally, annealing said to be the base of said wound hot rolled sheet is carried out such that the sheet is annealed at a temperature between 400°C to 700°C for a period between 5 to 24 hours,
- said wound hot rolled sheet is unwound and cleaned to obtain a hot rolled sheet that can be cold rolled, then
- said hot rolled sheet capable of being cold rolled is cold rolled with a reduction rate of 30 to 80% in order to obtain a cold rolled sheet, then,
- said cold rolled sheet is annealed by reheating at a speed Vc between 2 to 50°C/sec until it reaches a temperature $T_{soaking}$ between 760 to 1100°C, for a period $t_{soaking}$ between 60 to 600 seconds, then,
- said cold rolled sheet is cooled by subjecting it to cooling at a speed between 20 to 1000°C/sec such as the end of cooling temperature $T_{OA}$ i.e. lying between 360°C and 440°C, it being understood that:

$$T_{soaking} < 1.619 (T_{OA} - T1) \text{ where } T1 = -206 \text{ C} - 43 \text{ Mn} - 164 \text{ Cr} - 896 \text{ Nb}.$$

$$T_{soaking} > 1.619 (T_{OA} - T2) \text{ where } T2 = 50 \text{ C} + 4 \text{ Mn} - 14 \text{ Cr} + 1364 \text{ Nb} - 132.$$

with temperatures in °C and the chemical compositions in wt.-%,
- said cold rolled sheet is maintained in the temperature range between 360 to 440°C for a period tOA between 100 to 2000 seconds.

11. Manufacturing method according to claim 10, in which said sheet is isothermally maintained at the end of cooling temperature $T_{OA}$ between 360 and 440°C and between 100 and 2000 seconds.

12. Manufacturing method according to any one of the claims 10 or 11, for which said temperature $T_{fl}$ is greater than or equal to 900°C.

13. Manufacturing method of a coated sheet, according to which an annealed cold rolled sheet is provided according to any one of the claims 10 to 12 and that said sheet is cooled until it reaches ambient temperature before coating it with zinc or zinc alloy.

14. Manufacturing method of a coated sheet according to which an annealed cold rolled sheet is provided according to any one of the claims 10 to 13 and that said annealed cold rolled sheet is coated with zinc or zinc alloy through a hot-dipping galvanisation process before cooling it till it reaches ambient temperature.

15. Manufacturing method of a coated sheet according to which an annealed cold rolled sheet is provided according to any one of the claims 10 to 14 and that said annealed cold rolled sheet is coated with aluminium or aluminium alloy through a hot-dipping aluminising process before cooling it till it reaches ambient temperature.

16. Manufacturing method of a coated sheet according to which an annealed cold rolled sheet is provided according to any one of the claims 10 to 15, and which is cold rolled once again with a cold rolling rate between 0.1 to 3%.

17. Manufacturing method of an annealed cold rolled sheet and optionally coated according to any one of the claims 10 to 16, in which said sheet is then annealed at a holding temperature $T_{base}$ between 150°C to 190°C for a holding time $t_{base}$ between 10 hours to 48 hours.

18. Manufacturing method of a part from a sheet according to claim 10 in which the sheet is hot-stamped after annealing at the temperature $T_{soaking}$ and before cooling at speed Vc.

19. Use of a cold rolled and annealed sheet according to any one of the claims 1 to 9, or a sheet manufactured by a method according to any one of the claims 10 to 18 for manufacturing parts for vehicles.

**EP 3 024 951 B1**

## RÉFÉRENCES CITÉES DANS LA DESCRIPTION

**Documents brevets cités dans la description**

- WO 2012164579 A
- EP 1553202 A